(19) Europäisches Patentamt / European Patent Office / Office européen des brevets

(11) **EP 3 279 644 A1**

(12) **EUROPEAN PATENT APPLICATION**
published in accordance with Art. 153(4) EPC

(43) Date of publication:
07.02.2018 Bulletin 2018/06

(21) Application number: 16772088.7

(22) Date of filing: 04.03.2016

(51) Int Cl.:
*G01N 21/84* (2006.01)          *F16C 33/32* (2006.01)
*G01B 11/30* (2006.01)          *G01M 13/04* (2006.01)
*G01N 21/88* (2006.01)

(86) International application number:
PCT/JP2016/056794

(87) International publication number:
WO 2016/158204 (06.10.2016 Gazette 2016/40)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD

(30) Priority: 30.03.2015 JP 2015069736
30.03.2015 JP 2015069737

(71) Applicant: NTN Corporation
Osaka-shi, Osaka 550-0003 (JP)

(72) Inventors:
• TANAKA ,Yutaka
Kuwana-shi
Mie 511-0867 (JP)
• OOE, Hiroki
Kuwana-shi
Mie 511-8678 (JP)

(74) Representative: Bockhorni & Kollegen
Elsenheimerstraße 49
80687 München (DE)

(54) **ROTATION METHOD, INSPECTION METHOD, BEARING MANUFACTURING METHOD, BEARING, ROTATION DEVICE, AND INSPECTION DEVICE**

(57) A rotation method and an inspection method with which the entire surface of a spherical body can be checked in a stable manner and a method of manufacturing a bearing with these inspection methods are provided. The rotation method includes bringing a conical first cone (1a) having a first rotation shaft (2a) into contact with a spherical body (21) to be rotated at a first contact point of the spherical body (21) from a first direction along the first rotation shaft (2a) and bringing a conical second cone (1b) having a second rotation shaft (2b) into contact at a second contact point different from the first contact point of the spherical body (21) from the first direction and rotating the spherical body (21) around an axis extending in a direction along a line segment which connects the first contact point and the second contact point to each other while the first cone (1a) and the second cone (1b) are relatively pressed against the spherical body (21) from the first direction.

FIG.1

**Description**

TECHNICAL FIELD

This invention relates to a method of rotating a spherical body, an inspection method, a method of manufacturing a bearing, a bearing, a rotation apparatus, and an inspection apparatus, and more particularly to a method of rotating a spherical body applicable to inspection of the spherical body, an inspection method, a method of manufacturing a bearing using these methods, a bearing, a rotation apparatus, and an inspection apparatus.

BACKGROUND ART

Spherical bodies used for rolling elements of bearings have been subjected to total inspection of the whole surface for a defect at and under a surface because of influence on lifetime of bearings and sound. An inspection instrument which uses visible light, laser, a current, or ultrasonic waves has been available as an instrument used for inspection. Considering a structure of the instrument, a device such as a light source of visible light or laser and a probe for eddy current flaw detection or ultrasonic flaw detection is often fixed at one position. In this case, in order to inspect the whole surface of a spherical body, the spherical body should be rotated such that the entire surface of the spherical body can be viewed from one certain point.

A method and an apparatus for thus rotating a spherical body have conventionally been proposed (see, for example, Japanese Patent Laying-Open No. 8-271446 and Japanese Patent Publication No. 42-17608). For example, Japanese Patent Laying-Open No. 8-271446 has proposed a method and an apparatus for changing a position of a spherical body by independently varying a rotation speed of two discs in a construction that a spherical body is placed on two conical discs arranged as being opposed to each other such that rotation axes are linearly aligned and the spherical body is rotated by rotating the discs. Japanese Patent Publication No. 42-17608 has proposed a method and an apparatus for sandwiching a spherical body between surfaces of two conical discs arranged as being opposed to each other such that rotation axes are linearly aligned, bringing driven discs into contact with the spherical body, and rotating the spherical body with the driven discs in a direction perpendicular to the rotation axes of the discs. With such methods and apparatuses, the surfaces of the two conical discs are asymmetrical in shape with respect to the rotation axis. When the discs rotate as following rotation of the spherical body, force as swinging the rotation axis of the spherical body is applied to the spherical body because the surfaces (conical surfaces) of the discs are asymmetric with respect to the rotation axis of the discs. Consequently, the rotation axis of the spherical body is gradually varied so that a trace of one certain point on the surface of the spherical body exhibits a trace like meridians on the globe.

CITATION LIST

PATENT DOCUMENT

PTD 1: Japanese Patent Laying-Open No. 8-271446
PTD 2: Japanese Patent Publication No. 42-17608

SUMMARY OF INVENTION

TECHNICAL PROBLEM

With the conventional methods and apparatuses described above, when the surface of the disc in contact with the spherical body deforms due to wear, a degree of swing of the rotation axis of the spherical body is displaced from a designed value and consequently the entire surface (entire circumference) of the spherical body cannot be seen in some cases when the spherical body is viewed from one certain point (in inspection of a surface portion of the spherical body which can be viewed from one certain point, the entire surface of the spherical body may not thoroughly be inspected).

This invention was made to solve the problems as above, and an object of this invention is to provide a rotation method with which the entire surface of a spherical body can be checked in a stable manner when viewed from one certain point, an inspection method, a rotation apparatus and an inspection apparatus, and further a method of manufacturing a bearing using the inspection method and a bearing.

SOLUTION TO PROBLEM

A rotation method according to the present embodiment includes bringing a conical first cone having a first rotation shaft into contact with a spherical body to be rotated at a first contact point of the spherical body from a first direction along the first rotation shaft and bringing a conical second cone having a second rotation shaft extending in a direction along the first rotation shaft into contact at a second contact point different from the first contact point of the spherical body from the first direction and rotating the spherical body around an axis extending in a direction along a line segment connecting the first contact point and the second contact point to each other while the first cone and the second cone are relatively pressed against the spherical body from the first direction. In the rotating the spherical body, a rotation speed of the second rotation shaft is varied relatively to a rotation speed of the first rotation shaft.

An inspection method according to the present embodiment includes rotating a spherical body with the rotation method and inspecting a surface of the rotating spherical body.

A method of manufacturing a bearing according to the present embodiment includes processing a spherical body constituting a bearing, inspecting the processed spherical body with the inspection method, and assembling a bearing with the inspected spherical body.

A bearing according to the present embodiment is manufactured with the method of manufacturing a bearing.

A rotation apparatus according to the present embodiment includes a first cone, a second cone, a pressing mechanism, a rotationally driving portion, and a varying portion. The first cone is conical, has a first rotation shaft, and comes in contact with a spherical body to be rotated at a first contact point of the spherical body from a first direction along the first rotation shaft. The second cone is conical, has a second rotation shaft extending in a direction along the first rotation shaft, and comes in contact at a second contact point different from the first contact point of the spherical body from the first direction. The pressing mechanism relatively presses the first cone and the second cone against the spherical body from the first direction. The rotationally driving portion rotates the spherical body in contact with the first cone and the second cone around an axis extending in a direction along a line segment connecting the first contact point and the second contact point to each other. The varying portion varies a rotation speed of the second rotation shaft relatively to a rotation speed of the first rotation shaft.

An inspection apparatus according to the present embodiment includes a rotation apparatus and an inspection portion which inspects a surface of a spherical body rotated by the rotation apparatus.

ADVANTAGEOUS EFFECTS OF INVENTION

According to the above, a rotation method with which a spherical body can be rotated in a stable manner such that all portions of a surface of the spherical body pass a region which can be viewed from one certain point, an inspection method, a rotation apparatus and an inspection apparatus, and further a method of manufacturing a bearing using the inspection method and a bearing can be realized.

BRIEF DESCRIPTION OF DRAWINGS

Fig. 1 is a schematic diagram for illustrating a rotation apparatus according to the present embodiment.
Fig. 2 is a schematic side view of the rotation apparatus shown in Fig. 1.
Fig. 3 is a schematic diagram illustrating an eccentric member of a varying portion.
Fig. 4 is a schematic diagram for illustrating an operation of the varying portion.
Fig. 5 is a graph showing relation of a distance from a rotation shaft center to a pitch circle and a radius of the pitch circle with an angle of rotation of the eccentric member.
Fig. 6 is a schematic diagram for illustrating an operation of the rotation apparatus.
Fig. 7 is a schematic diagram for illustrating an operation of the rotation apparatus.
Fig. 8 is a graph showing relation between an angle of rotation of a ball and an angle of swing motion.
Fig. 9 is a diagram illustrating a state of rotation of a rotated spherical body.
Fig. 10 is a graph showing relation between a pitch angle and an angle of swing motion.
Fig. 11 is a graph showing relation between a pitch and an amount of eccentricity.
Fig. 12 is a diagram for illustrating a state of rotation of the rotated spherical body.
Fig. 13 is a diagram for illustrating a state of rotation of the rotated spherical body.
Fig. 14 is a diagram for illustrating a state of rotation of the rotated spherical body.
Fig. 15 is a block diagram for illustrating an inspection method according to the present embodiment.
Fig. 16 is a schematic diagram for illustrating an inspection apparatus according to the present embodiment.
Fig. 17 is a flowchart for illustrating the inspection apparatus according to the present embodiment.

Fig. 18 is a flowchart for illustrating a method of manufacturing a bearing according to the present embodiment.
Fig. 19 is a schematic diagram for illustrating a bearing according to the present embodiment.

DESCRIPTION OF EMBODIMENTS

An embodiment of the present disclosure will be described below with reference to the drawings. The same or corresponding elements in the drawings below have the same reference characters allotted and description thereof will not be repeated.

<Description of Rotation Apparatus and Rotation Method>

Construction of Rotation Apparatus:

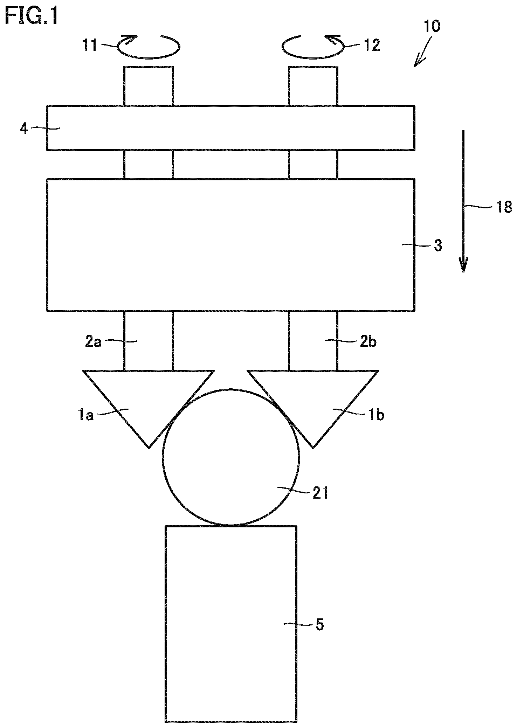

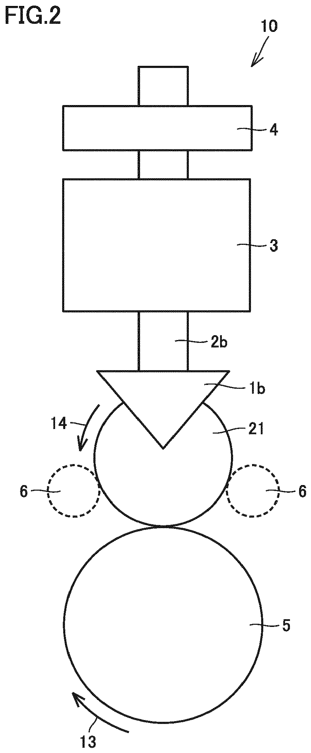

A rotation apparatus according to the present embodiment will be described with reference to Figs. 1 and 2. A rotation apparatus 10 mainly includes a first cone 1a, a second cone 1b, a base portion 3, a rotation roller 5 as a rotationally driving portion, and a varying portion 4. First cone 1a is conical and has a first rotation shaft 2a. First cone 1a comes in contact with a spherical body 21 to be rotated at a first contact point of spherical body 21 from a first direction along rotation shaft 2a (a direction downward from above in Fig. 1). Second cone 1b is conical and has a second rotation shaft 2b extending in a direction along first rotation shaft 2a. Second cone 1b comes in contact at a second contact point different from the first contact point of spherical body 21 from the first direction.
Base portion 3 rotatably holds rotation shafts 2a and 2b. Varying portion 4 which varies rotation speeds of rotation shafts 2a and 2b is arranged opposite to rotation roller 5 when viewed from base portion 3. Varying portion 4 is connected to rotation shafts 2a and 2b. For example, an eccentric member can be employed as varying portion 4. A construction example of varying portion 4 will be described later.
Since first cone 1a and second cone 1b are in contact with spherical body 21 from above, rotation shafts 2a and 2b, base portion 3, and varying portion 4 function as weights. Rotation shafts 2a and 2b, base portion 3, and varying portion 4 function as a pressing mechanism which presses first and second cones 1a and 1b against spherical body 21. Consequently, first and second cones 1a and 1b are pressed in a direction shown with an arrow 18 in Fig. 1 (against spherical body 21). A member separate from rotation shafts 2a and 2b, base portion 3, and varying portion 4 described above, such as a spring or a weight, may be arranged as the pressing mechanism.
Rotation roller 5 as the rotationally driving portion is connected to a not-shown drive motor and can rotate spherical body 21 as it is rotated by the drive motor. Rotation roller 5 rotates spherical body 21 in contact with first cone 1a and second cone 1b around an axis extending along a line segment connecting the first contact point and the second contact point to each other (an axis extending in a lateral direction on the surface of Fig. 1 or an axis extending in a direction perpendicular to the surface of Fig. 2). With rotation of spherical body 21, first and second cones 1a and 1b also rotate. For example, when rotation roller 5 rotates in a direction shown with an arrow 13 in Fig. 2, spherical body 21 rotates in a direction shown with an arrow 14 in Fig. 2. With rotation of spherical body 21, first cone 1a and first rotation shaft 2a rotate in a direction shown with an arrow 11 in Fig. 1. With rotation of spherical body 21, second cone 1b and second rotation shaft 2b rotate in a direction shown with an arrow 12 in Fig. 1.
Rotation apparatus 10 may include an auxiliary roller 6 for supporting spherical body 21 as shown in Fig. 2. Though auxiliary roller 6 may be arranged on opposing sides of spherical body 21 with first and second cones 1a and 1b being interposed as shown in Fig. 2, only one auxiliary roller 6 may be arranged. For example, auxiliary roller 6 is preferably arranged in the rear of spherical body 21 in a direction along a direction of rotation (the direction shown with arrow 13 in Fig. 2) of rotation roller 5.
Any feature can be adopted as varying portion 4 so long as the feature can vary a rotation speed of second rotation shaft 2b relatively to a rotation speed of first rotation shaft 2a. For example, a first eccentric member connected to first rotation shaft 2a and a second eccentric member connected to second rotation shaft 2b may be included as varying portion 4.
For example, the first eccentric member and the second eccentric member may rotatably be arranged while they are in contact between first rotation shaft 2a and second rotation shaft 2b. In this case, with rotation of first and second rotation shafts 2a and 2b, the first eccentric member and the second eccentric member also rotate. With rotation of the first eccentric member and the second eccentric member, a position of a portion of contact between the first eccentric member and the second eccentric member and a distance between first rotation shaft 2a and second rotation shaft 2b are varied. With variation in distance, a difference is produced between a rotation speed of first rotation shaft 2a (first cone 1a) and a rotation speed of second rotation shaft 2b (second cone 1b). Thus, with a difference in rotation speed between first cone 1a and second cone 1b in contact with spherical body 21, a rotation axis of spherical body 21 can be inclined. Consequently, for example, as in Fig. 1, spherical body 21 can be rotated such that the entire outer circumferential surface of spherical body 21 passes a region on a front side of rotation apparatus 10 without fail.

A shape of first cone 1a and second cone 1b is not limited to the shape as shown in Figs. 1 and 2, and a shape different from the shape shown in Figs. 1 and 2 may be employed so long as the cone has a conical side surface (a side surface in contact with spherical body 21).

Rotation Method (Operation of Rotation Apparatus):

The rotation method according to the present embodiment is a method of rotating spherical body 21 with rotation apparatus 10 described above. Initially, conical first cone 1a having first rotation shaft 2a is brought in contact with spherical body 21 to be rotated at the first contact point of spherical body 21 from the first direction along first rotation shaft 2a. Conical second cone 1b having second rotation shaft 2b extending in the direction along first rotation shaft 2a is brought in contact at the second contact point different from the first contact point of spherical body 21 from the first direction. As shown in Figs. 1 and 2, first cone 1a and second cone 1b are pressed against spherical body 21 owing to weights of first and second rotation shafts 2a and 2b and base portion 3. Rotation roller 5 is arranged as being in contact with spherical body 21 on a side opposite to a side where first cone 1a and second cone 1b are in contact with spherical body 21. Auxiliary roller 6 is also arranged as being in contact with spherical body 21.

Then, rotation roller 5 is rotated while first cone 1a and second cone 1b are pressed against spherical body 21 downward from above in Fig. 1. Consequently, spherical body 21 rotates around the axis extending in the direction along the line segment connecting the first contact point and the second contact point to each other (for example, an axis which passes through the center of spherical body 21 in Fig. 2 and extends in the direction perpendicular to the surface of Fig. 2).

With such rotation of spherical body 21, first cone 1a and second cone 1b rotate. With rotation of first cone 1a and second cone 1b, first rotation shaft 2a and second rotation shaft 2b also rotate. With a function of the eccentric member in varying portion 4, a rotation speed of first cone 1a and a rotation speed of second cone 1b are varied.

Consequently, balance between force applied to spherical body 21 at the portion of contact between first cone 1a and spherical body 21 and force applied to spherical body 21 at the portion of contact between second cone 1b and spherical body 21 is varied. Such variation in balance of force is applied to thereby incline the rotating axis of spherical body 21. Consequently, the rotating axis of spherical body 21 is gradually varied and consequently spherical body 21 can be rotated such that the entire outer circumference of spherical body 21 passes a region on a front side of rotation apparatus 10 without fail.

As to Mechanism Which Varies Rotation Axis of Spherical Body:

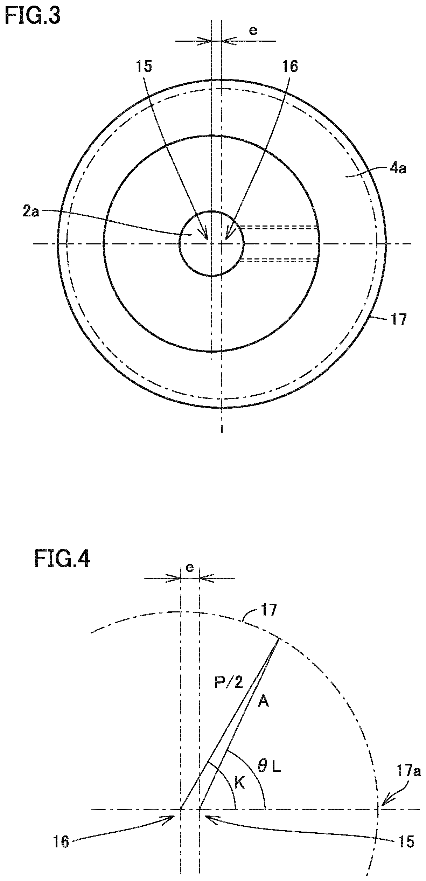

A mechanism which varies the rotating axis of the spherical body (an operation mechanism of varying portion 4) in the rotation apparatus and the rotation method in the present embodiment will be described below in detail with reference to Figs. 3 to 14. An example in which an eccentric member is employed as varying portion 4 will be described below.

In the rotation apparatus and the rotation method in the present embodiment, as shown in Fig. 3, an eccentric member 4a is connected to first rotation shaft 2a of first cone 1a (see Fig. 1). As shown in Fig. 3, a rotation shaft center 15 representing the center of first rotation shaft 2a and a pitch circle center 16 representing the center of a pitch circle 17 of eccentric member 4a are arranged at positions distant by an amount of eccentricity e. An eccentric member is connected also to second rotation shaft 2b of second cone 1b as being eccentric by similar amount of eccentricity e.

Any feature can be adopted for the eccentric member connected to first and second rotation shafts 2a and 2b. Eccentric member 4a connected to first rotation shaft 2a and the eccentric member connected to second rotation shaft 2b are arranged to be engaged with each other, and first and second rotation shafts 2a and 2b rotate in coordination with the eccentric members being interposed.

As described above, when eccentric member 4a connected to first rotation shaft 2a and the eccentric member connected to second rotation shaft 2b rotate in coordination owing to eccentricity of the eccentric members, a difference in angle of rotation is produced between first rotation shaft 2a and second rotation shaft 2b, which will specifically be described below.

Referring initially to Fig. 4, a position on the pitch circle at which a distance A from rotation shaft center 15 to pitch circle 17 of the eccentric member is minimum is defined as a position 17a. An angle of rotation of rotation shaft 2a from a state that position 17a is in contact with the other eccentric member is denoted as $\theta$, an angle of rotation of eccentric member 4a with position 17a being defined as a starting point is denoted as K, and a diameter of pitch circle 17 is denoted as P. The angle of rotation of first rotation shaft 2a located on the left in Fig. 1 and eccentric member 4a connected to first rotation shaft 2a is denoted as $\theta_L$ and the distance is denoted as $A_L$. The angle of rotation of second rotation shaft 2b located on the right in Fig. 1 and the eccentric member connected to second rotation shaft 2b is denoted as $\theta_R$ and the distance is denoted as $A_R$. An expression

$$A_L = \sqrt{\left(\frac{P}{2}\right)^2 + e^2 - Pe \cdot \cos K}$$

$$\theta_L = \cos^{-1}\left\{\frac{(P/2)^2 - A_L{}^2 - e^2}{2A_L e}\right\}$$

holds for first rotation shaft 2a and eccentric member 4a located on the left based on the cosine law. An expression

$$A_R = \sqrt{\left(\frac{P}{2}\right)^2 + e^2 + Pe \cdot \cos K}$$

$$\theta_R = \cos^{-1}\left\{\frac{A_R{}^2 + e^2 - (P/2)^2}{2A_R e}\right\}$$

holds for second rotation shaft 2b and the eccentric member located on the right.

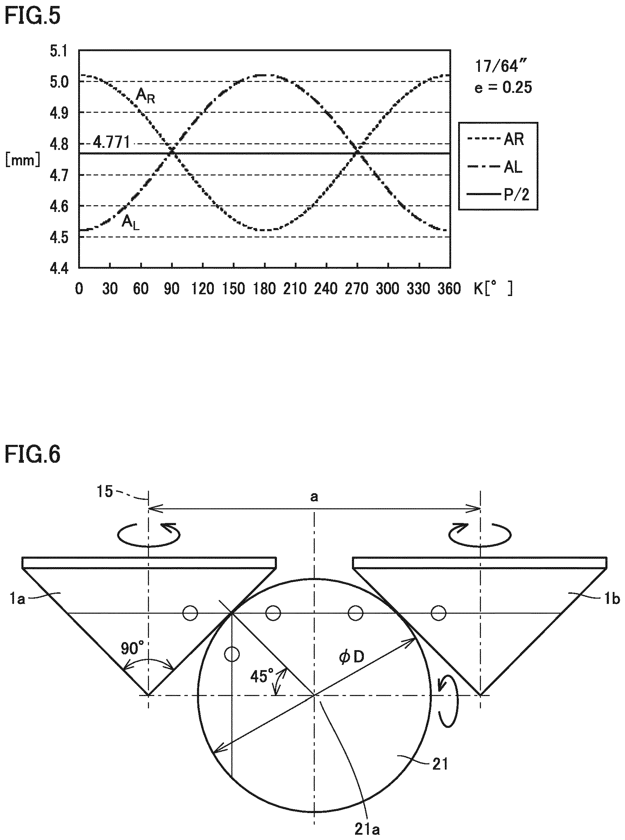

Relation of distance $A_L$, distance $A_R$, and a radius (P/2) of pitch circle 17 shown in the expressions above with angle of rotation K of eccentric member 4a as shown in Fig. 5 is satisfied. Fig. 5 shows a graph of relation of distance A from rotation shaft center 15 to the pitch circle and a radius (P/2) of the pitch circle with angle of rotation K of the eccentric member. The abscissa in Fig. 5 represents angle of rotation K (unit: °) of the eccentric member and the ordinate represents distance $A_L$ (also called a radius of a left eccentric member), distance $A_R$ (also called a radius of a right eccentric member), and a radius (P/2) of pitch circle 17 (each unit: mm). The graph in Fig. 5 shows an example in which spherical body 21 is a rolling element of a bearing having a size of 17/64 and amount of eccentricity e is 0.25 mm. In the graph in Fig. 5, a dotted line represents variation in distance $A_R$, a chain dotted line represents variation in distance $A_L$, and a solid line represents a radius (P/2) of pitch circle 17.

As can be seen in Fig. 5 and the expressions above, angles of rotation $\theta_L$ and $\theta_R$ of rotation shafts 2a and 2b become relatively smaller when a condition of A > P/2 is satisfied and become relatively greater when a condition of A < P2 is satisfied. Rotation speeds of rotation shafts 2a and 2b (that is, rotation speeds of first cone 1a and second cone 1b) periodically repeat a state that the speed is relatively high and a state that the speed is relatively low as shown in Fig. 5. Though the period of repetition is substantially the same between first cone 1a and second cone 1b, relation in terms of the speed is reverse between first cone 1a and second cone 1b. Namely, when the rotation speed of first cone 1a is relatively high, the rotation speed of second cone 1b is relatively low.

One rotation of spherical body 21 (ball) to be inspected and one rotation of first cone 1a and second cone 1b (conical cones) are preferably in synchronization. In order to achieve this condition, as shown in Fig. 5, a distance a between rotation shaft center 15 of first rotation shaft 2a and a rotation shaft center of second rotation shaft 2b (hereinafter also called a distance between centers) is given in an expression:

$$P = (\text{distance between centers } a) = 4 \cdot \frac{D}{2} \cdot \sin 45°$$

where D represents a diameter of spherical body 21 as shown in Fig. 6.

As shown in Fig. 6, a diameter of a portion of contact between first cone 1a and spherical body 21 (ball) (twice a distance from rotation shaft center 15 to the contact portion in Fig. 5) is half diameter P of the pitch circle. This relation is also applicable to second cone 1b. As shown in Fig. 6, an angle formed between a line segment extending from a center 21a of spherical body 21 toward the portion of contact between first cone 1a and spherical body 21 and a horizontal is 45°.

Therefore, for example, a distance of the portion in contact with spherical body 21 on a side surface of first cone 1a or second cone 1b when first cone 1a and second cone 1b rotate by any angle (angle of rotation $\theta_L$ or angle of rotation $\theta_R$) (a distance L of movement of the point of contact in first cone 1a in contact with spherical body 21 when the angle of rotation is zero or a distance R of movement of the point of contact in second cone 1b in contact with spherical body 21 when the angle of rotation is zero) is expressed in an expression

$$L = \left(\frac{P}{2}\right) \cdot \pi \cdot \frac{\theta_L}{360°}$$

$$R = \left(\frac{P}{2}\right) \cdot \pi \cdot \frac{\theta_R}{360°}$$

An angle $\theta_B$ by which spherical body 21 has rotated is expressed in an expression

$$\theta_B = \frac{\theta_L + \theta_R}{2}.$$

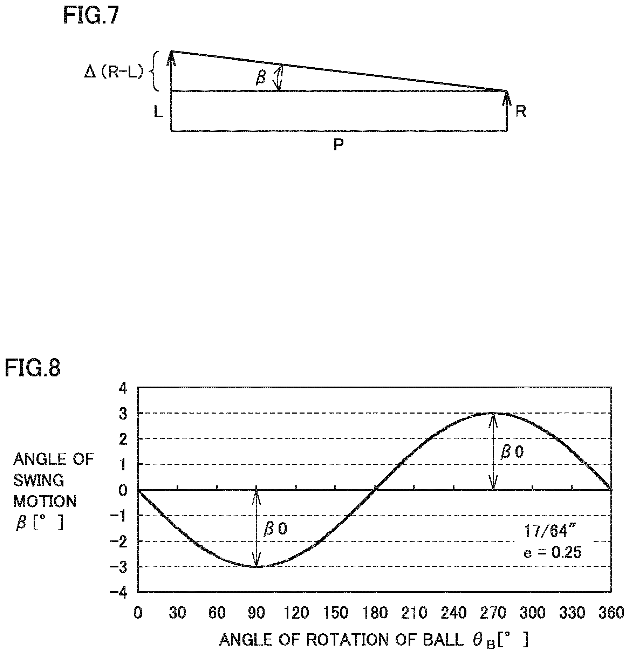

An angle $\beta$ of swing motion of spherical body 21 (ball) caused by a difference in rotation between first cone 1a and second cone 1b (also called conical cones) is expressed based on a difference between distances L and R of the left and right conical cones as shown in Fig. 7 as

$$\beta = \frac{R-L}{2\pi P} \cdot 360° = \frac{\theta_R - \theta_L}{2}.$$

Fig. 7 is a schematic diagram for illustrating relation between angle $\beta$ of swing motion of spherical body 21 caused by a difference in rotation between first cone 1a and second cone 1b and distances L and R of first cone 1a and second 1b.

Fig. 8 shows relation between angle $\theta_B$ by which spherical body 21 has rotated and angle $\beta$ of swing motion obtained based on the expression above. Fig. 8 is a graph showing relation between angle $\theta B$ of the spherical body and angle $\beta$ of swing motion, in which the abscissa represents angle of rotation $\theta_B$ (unit: °) and the ordinate represents angle $\beta$ of swing motion (unit: °). Fig. 8 shows an example in which spherical body 21 is a rolling element of a bearing having a size of 17/64 and amount of eccentricity e is 0.25 mm as in Fig. 5.

As can be seen also in Fig. 8, angle $\beta$ of swing motion is expressed in an expression

$$\beta = \beta_0 \sin \theta_B,$$

and the angles draw substantially a sinusoidal curve. $\beta_0$ in the expression is directly proportional to amount of eccentricity e of the eccentric member. $\beta_0$ increases with increase in amount of eccentricity e.

A motion of a coordinate (x, y, z) on spherical body 21 when spherical body 21 rotates by a small angle $\Delta\theta$ while angle $\beta$ of swing motion is varying is expressed as

$$\begin{cases} x' = x \\ y' = y\cos\beta + z\sin\beta \\ z' = -y\sin\beta + z\cos\beta \end{cases}$$

$$\begin{cases} x'' = x'\cos\triangle\theta - z'\sin\triangle\theta \\ y'' = y' \\ z'' = x'\sin\triangle\theta + z'\cos\triangle\theta \end{cases}$$

$$\begin{cases} x''' = x'' \\ y''' = y'' \cos \beta - z'' \sin \beta \, , \\ z''' = y'' \sin \beta + z'' \cos \beta \end{cases}$$

and (x, y, z) reaches (x", y", z").

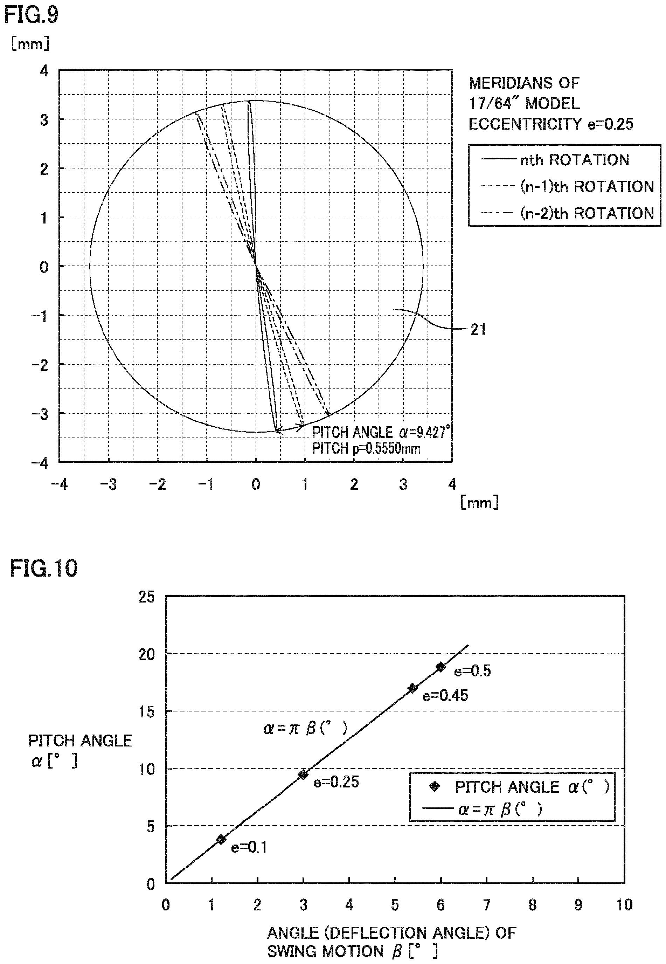

Calculation of a meridian drawn on rotating spherical body 21 based on the expression above is as seen in Fig. 9. The meridian means a line segment (pattern) formed on the surface of spherical body 21 by bringing such a writing instrument as a marker into contact with one prescribed point on the surface of spherical body 21 while spherical body 21 is rotated with the method described above.

Fig. 9 shows a state that meridians shown on the surface of spherical body 21 are viewed from a top side of spherical body 21. Fig. 9 shows an example in which spherical body 21 is a rolling element of a bearing having a size of 17/64 and amount of eccentricity e is 0.25 mm as in Fig. 8. The abscissa and the ordinate in Fig. 9 represent dimensions when viewed from the top side of spherical body 21 (a vertical dimension: unit mm and a lateral dimension: unit: mm), a solid line represents a meridian formed in the nth week of rotation of spherical body 21, a dotted line represents a meridian formed in the n-1th week, and a chain dotted line represents a meridian formed in the n-2th week.

A pitch angle α (unit: °) of and a pitch p (unit: mm) between the meridians can be found based on a result of calculation shown in Fig. 9. Under conditions shown in Fig. 9, pitch angle α is 9.427° and pitch p is 0.5550 mm. Pitch angle α means an angle formed by the nth week meridian and a meridian on the n-1th rotation surface with respect to the center of spherical body 21. Pitch p means a distance between the nth week meridian and a meridian on the n-1th rotation surface on an outer circumference of spherical body 21 in Fig. 9.

The inventor has conducted calculation as described above with amount of eccentricity e being varied and found that angle β (also called a deflection angle β) of swing motion and pitch angle α satisfy proportional relation (α = πβ) as shown in Fig. 10. Fig. 10 is a graph showing relation between angle β of swing motion and pitch angle α. The abscissa in Fig. 10 represents angle β (unit: °) of swing motion and the ordinate represents pitch angle α (unit: °).

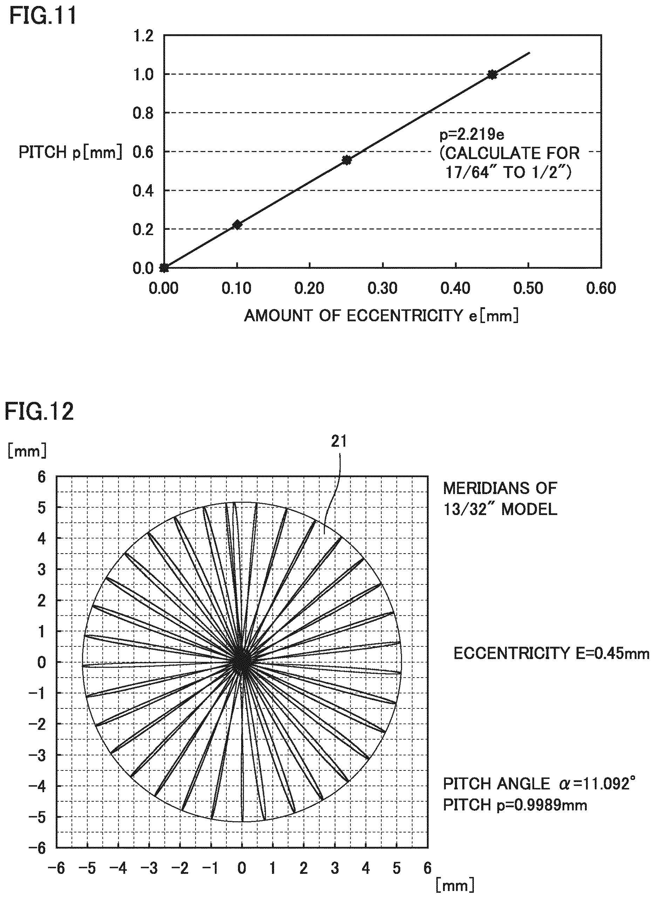

When pitches p between meridians at the time of movement off center are plotted with respect to amount of eccentricity e, proportional relation (linear relation) as in Fig. 11 is obtained. Fig. 11 is a graph showing relation between pitch p and amount of eccentricity e. The abscissa in Fig. 11 represents amount of eccentricity e (unit: mm) and the ordinate represents pitch p (unit: mm). Relation between pitch p and amount of eccentricity e is applicable also to a spherical body having a size other than the size of 17/64". When calculation for finding meridians on spherical bodies up to a size of 1/2" as described above is conducted for confirmation, relation of p = 2.219e as shown in Fig. 11 is satisfied.

Based on these results, when pitch p is set to 1 mm, amount of eccentricity e is 0.45 mm regardless of a size of spherical body 21.

Verification for Spherical Body Having Size of 13/32"

The result of verification described above is verified in an example of a spherical body having a size of 13/32". As described above, when pitch p = 1 mm is set, amount of eccentricity e = 0.45 mm is set. Fig. 12 shows an example in which meridians are shown on the surface of the spherical body under this condition. Fig. 12 is a schematic diagram of meridians formed on the surface of the spherical body having the size of 13/32" when viewed from the top side of the spherical body.

The ordinate and the abscissa in Fig. 12 are basically the same as the ordinate and the abscissa in Fig. 9, respectively. In the diagram of the meridians shown in Fig. 12, pitch angle α is 11.092° and pitch p is 0.9989 mm.

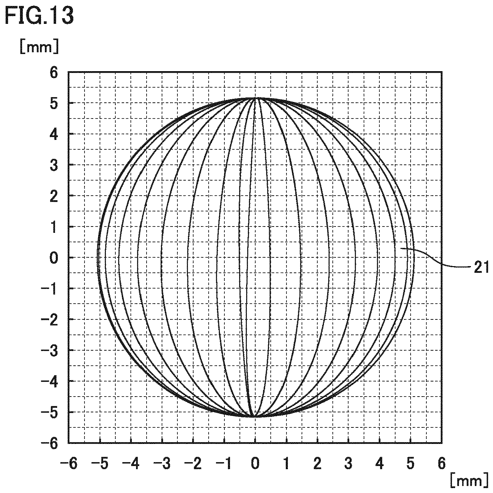

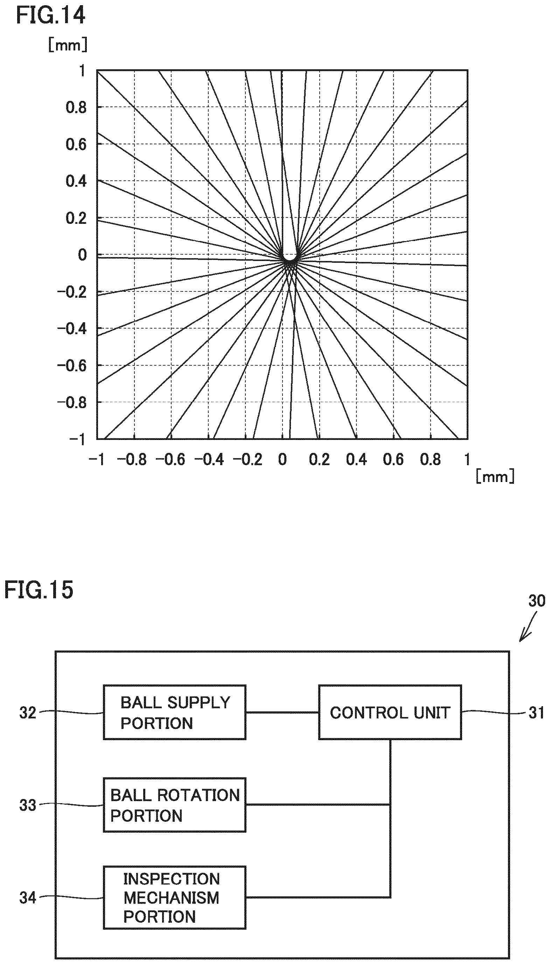

Fig. 13 shows the meridians on spherical body 21 in Fig. 12 when viewed from an equator side of spherical body 21 (a direction moved by 90° from a direction of view of spherical body 21 in Fig. 12 with respect to the center of spherical body 21). The ordinate and the abscissa in Fig. 13 represent dimensions of spherical body 21 when viewed from the equator (a vertical dimension: unit mm and a lateral dimension: unit: mm). Fig. 14 is an enlarged view of a top portion of the spherical body shown in Fig. 12 (a central portion of spherical body 21 in Fig. 12). As shown in Fig. 14, a pole cap is produced at the top portion. The pole gap seems to be an error caused by the fact that Δθ is set to 0.1° for a calculation purpose, but it may give rise to no problem in actual design. From the foregoing, spherical body 21 (ball) having a size, for example, of 13/32" can be designed with amount of eccentricity e of 0.45 mm being set.

<Construction of Inspection Apparatus>

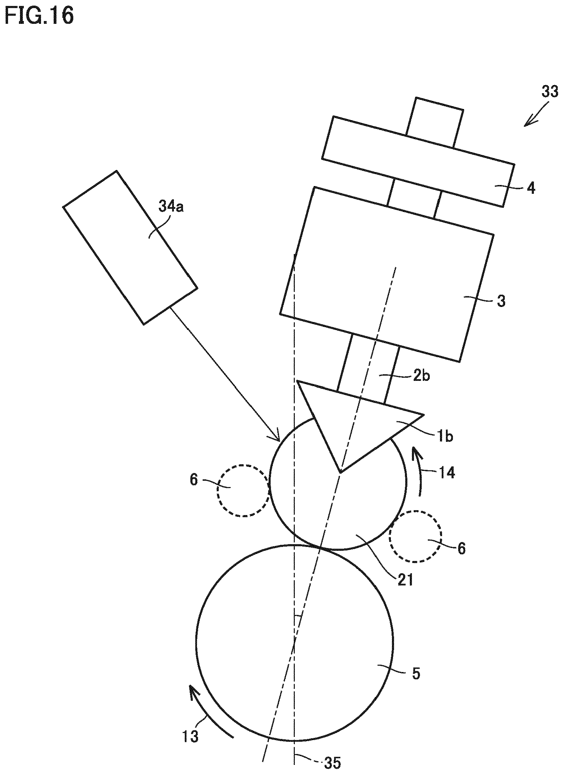

An inspection apparatus including the rotation apparatus described above will be described with reference to Figs. 15 and 16. Fig. 15 is a block diagram for illustrating a construction of the inspection apparatus. Fig. 16 is a schematic diagram showing a construction of one example of the inspection apparatus.

As shown in Fig. 15, an inspection apparatus 30 mainly includes a ball supply portion 32, a ball rotation portion 33, an inspection mechanism portion 34, and a control unit 31. Ball supply portion 32 supplies a spherical body (ball) to be inspected to ball rotation portion 33. Any method can be employed as a method of supplying a spherical body. The rotation apparatus according to the present embodiment is applied as ball rotation portion 33. Inspection mechanism portion 34 inspects the surface of the spherical body rotated by ball rotation portion 33. Any construction can be adopted for the construction of inspection mechanism portion 34, and for example, such a construction that a state of the surface of the spherical body is detected by emitting laser beams to the surface of the spherical body and detecting laser beams reflected by the surface of the spherical body can be adopted. Control unit 31 controls ball supply portion 32, ball rotation portion 33, and inspection mechanism portion 34. For example, control unit 31 may receive inspection data from inspection mechanism portion 34 and perform data processing for determining quality of the spherical body to be inspected based on the inspection data.

Referring to Fig. 16, the inspection apparatus representing one example of the inspection apparatus described above includes ball rotation portion 33 including the rotation apparatus shown in Figs. 1 and 2, a laser measurement instrument 34a as the inspection mechanism portion, and a not-shown control unit and the ball supply portion. Though ball rotation portion 33 is basically the same in construction as the rotation apparatus shown in Figs. 1 and 2, central axes of the first rotation shaft and second rotation shaft 2b are inclined with respect to a vertical direction shown with a line segment 35. Ball rotation portion 33 can rotate the spherical body in a direction shown with arrow 14 as in the rotation apparatus shown in Figs. 1 and 2 and can swing the rotation axis of spherical body 21 owing to a difference in rotation speed between first cone 1a (see Fig. 1) and second cone 1b.

Laser measurement instrument 34a is arranged on a side opposite to a direction of inclination of the central axis of rotation shaft 2b with respect to the vertical direction shown with line segment 35. Laser measurement instrument 34a emits laser beams to the surface of rotating spherical body 21 and detects laser beams (reflected light) reflected by the surface of spherical body 21. As the rotation axis of spherical body 21 swings as described above, laser beams emitted from laser measurement instrument 34a can consequently thoroughly scan the entire surface of spherical body 21.

Data on reflected light detected by laser measurement instrument 34a is transmitted to the control unit. The control unit performs prescribed processing such as operation processing onto the received data. Alternatively, the control unit may have a display such as a monitor show the received data as it is as image data. A state of the entire surface of spherical body 21 can thus be inspected based on the detected data.

<Inspection Method>

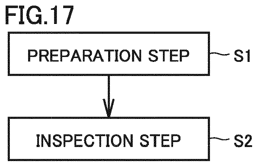

A method of inspecting a spherical body using the inspection apparatus described above will be described. Fig. 17 is a flowchart for illustrating the inspection method according to the present embodiment. The inspection method according to the present embodiment will be described with reference to Fig. 17.

As shown in Fig. 17, in the inspection method according to the present embodiment, initially, a preparation step (S1) is performed. Specifically, in the step (S1), spherical body 21 to be inspected is prepared. In the step (S1), ball rotation portion 33 for performing the rotation method described above and the inspection apparatus shown in Fig. 16 are prepared.

Then, an inspection step (S2) is performed. Specifically, spherical body 21 to be inspected is set on ball rotation portion 33 of the inspection apparatus. Spherical body 21 is inspected with the inspection mechanism portion while spherical body 21 is rotated by ball rotation portion 33. Specifically, laser measurement instrument 34a shown in Fig. 16 emits laser beams to rotating spherical body 21. Laser measurement instrument 34a detects laser beams (reflected light) reflected by the surface of spherical body 21. Data on reflected light detected by laser measurement instrument 34a is transmitted to the control unit. The control unit performs prescribed operation processing on the data. The spherical body can thus be inspected.

<Method of Manufacturing Bearing>

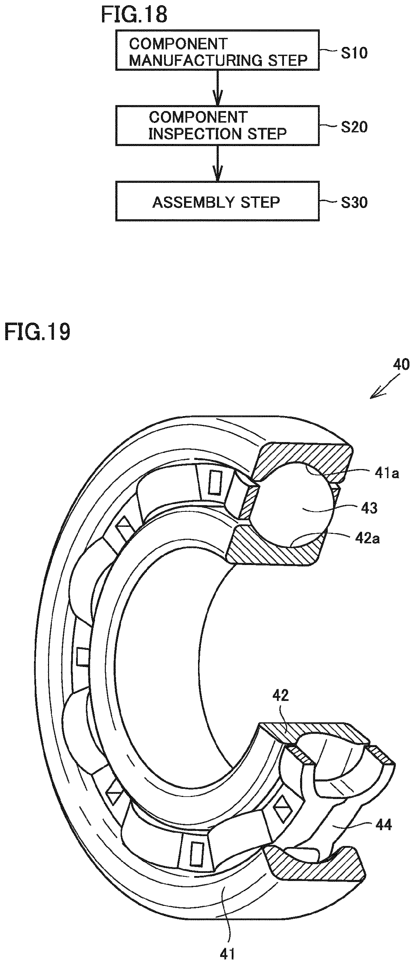

A method of manufacturing a bearing according to the present embodiment will be described with reference to Fig. 18. The method of manufacturing a bearing according to the present embodiment is a method of manufacturing a bearing inspected with the inspection method described above. Initially, a component manufacturing step (S10) is performed. In this step (S10), components constituting a bearing such as a ball (rolling element) of the bearing representing a spherical body, an inner ring, an outer ring, and a cage are manufactured. Any conventionally well-known method can be employed as the method of manufacturing these components.

Then, a component inspection step (S20) is performed. In this step (S20), the ball (rolling element) is inspected with the inspection method described above. By inspecting the ball while the ball is rotated with the rotation method according to the present embodiment as described above, the entire circumference of the ball can thoroughly be inspected. Other components (the inner ring, the outer ring, and the cage) may also be inspected with a conventionally well-known inspection method.

Then, an assembly step (S30) is performed. In this step (S30), a bearing is manufactured by assembling the ball which has passed the inspection in the step (S20) described above and other components. A conventionally well-known method can be used for the step of assembling a bearing. A bearing according to the present embodiment can thus be manufactured.

<Construction of Bearing>

A bearing 40 according to the present embodiment will be described with reference to Fig. 19. Bearing 40 is a ball bearing such as a bearing rotatably supporting a rotation shaft of transportation equipment axially on a member such as a housing arranged as being opposed to an outer circumferential surface of the rotation shaft, and it is for example, a deep-groove ball bearing.

Referring to Fig. 19, bearing 40 includes an outer ring 41 having an outer ring rolling contact surface 41a on an inner circumferential surface, an inner ring 42 having an inner ring rolling contact surface 42a on an outer circumferential surface, a plurality of rolling elements 43, and a cage 44. Inner ring 42 is arranged on an inner side of outer ring 41 such that inner ring rolling contact surface 42a is opposed to outer ring rolling contact surface 41a of outer ring 41.

Outer ring 41 and inner ring 42 are made, for example, of steel. For example, high carbon-chromium bearing steel such as SUJ2 under JIS standards, alloyed steel for machine structural use such as SCM420, or carbon steel for machine structural use such as S53C can be employed as a material for outer ring 41 and inner ring 42.

Rolling element 43 can be made of any material such as steel or ceramics, and for example, it is a ball made of ceramics composed of $Si_3N_4$ (silicon nitride). Rolling element 43 comes in contact with outer ring rolling contact surface 41a and inner ring rolling contact surface 42a and a plurality of rolling elements are arranged as being aligned on an annular raceway along a circumferential direction of outer ring rolling contact surface 41a and inner ring rolling contact surface 42a. Cage 44 is composed, for example, of polyamide such as nylon and holds rolling elements 43 at a prescribed pitch in the circumferential direction.

Such a bearing 40 is manufactured with the method of manufacturing a bearing according to the present embodiment described above. Therefore, the entire circumference of rolling element 43 has been inspected and high durability has been ensured.

Characteristic features of the embodiment of the present invention will be listed, although some may be repetition of the description above.

Rotation apparatus 10 according to the present embodiment includes first cone 1a, second cone 1b, a pressing mechanism (first and second rotation shafts 2a and 2b, base portion 3, and varying portion 4), the rotationally driving portion (rotation roller 5), and varying portion 4. First cone 1a is conical, has first rotation shaft 2a, and comes in contact with spherical body 21 to be rotated at the first contact point of spherical body 21 from the first direction along first rotation shaft 2a. Second cone 1b is conical, has second rotation shaft 2b extending in the direction along first rotation shaft 2a, and comes in contact at the second contact point different from the first contact point of spherical body 21 from the first direction. The pressing mechanism (first and second rotation shafts 2a and 2b, base portion 3, and varying portion 4) relatively presses first cone 1a and second cone 1b against spherical body 21 from the first direction. Rotation roller 5 rotates spherical body 21 in contact with first cone 1a and second cone 1b around an axis extending in a direction along a line segment connecting the first contact point and the second contact point to each other. Varying portion 4 varies a rotation speed of second rotation shaft 2b relatively to a rotation speed of first rotation shaft 2a.

By doing so, a rotation speed of first cone 1a in contact with spherical body 21 rotated by rotation roller 5 and a rotation speed of second cone 1b can be varied relatively to each other. Therefore, spherical body 21 can be rotated such that all portions of the surface of spherical body 21 pass a region viewed from one certain point. Therefore, the entire surface of spherical body 21 can reliably be checked in this region.

Even when first cone 1a and second cone 1b are worn due to contact with spherical body 21, the pressing mechanism presses first cone 1a and second cone 1b against spherical body 21 from the first direction along rotation shafts 2a and 2b so that a distance from an axial line of first rotation shaft 2a of first cone 1a (the central axis of rotation) to a point of contact between spherical body 21 and first cone 1a or a distance from an axial line of rotation shaft 2b of second cone 1b (a central axis of rotation) to a point of contact between spherical body 21 and second cone 1b can be maintained constant. Therefore, even when first cone 1a or second cone 1b is worn, a condition of swing of the rotating axis of spherical body 21 owing to rotation of first cone 1a or second cone 1b can be maintained constant. Since the rotating axis of spherical body 21 can accurately be swung for a long period of time, the entire spherical body 21 can be checked in a stable manner.

In rotation apparatus 10, the rotationally driving portion (rotation roller 5) may include rotation roller 5 which comes in contact with spherical body 21 from the second direction opposite to the first direction (a direction upward from below in Fig. 2) and rotates spherical body 21. In this case, rotation roller 5 can rotate spherical body 21 without interference with first cone 1a or second cone 1b.

Rotation apparatus 10 may further include a support member (auxiliary roller 6) which supports spherical body 21. In this case, during rotation of spherical body 21, variation in position of spherical body 21 with respect to first cone 1a, second cone 1b, and rotation roller 5 can be suppressed by the support member (auxiliary roller 6).

In rotation apparatus 10, varying portion 4 may include the eccentric member connected to each of first rotation shaft 2a and second rotation shaft 2b. In this case, rotation speeds of first rotation shaft 2a and second rotation shaft 2b can be varied relatively to each other with the use of the eccentric member. For example, first eccentric member 4a is set for first rotation shaft 2a, the second eccentric member is set for second rotation shaft 2b, and first eccentric member 4a and the second eccentric member are arranged to be engaged with each other. By doing so, with rotation of first and second rotation shafts 2a and 2b, the first and second eccentric members also rotate. A position of a portion of engagement between the first and second eccentric members is varied between first and second rotation shafts 2a and 2b with rotation of the first and second eccentric members. A rotation speed at the portion of engagement between the eccentric members is the same, whereas a distance from the portion of engagement to first rotation shaft 2a and a distance from the portion of engagement to second rotation shaft 2b are varied. Therefore, rotation speeds of first and second rotation shafts 2a and 2b are varied with variation in distance. By thus employing the eccentric member, a construction of an apparatus can be more simplified than such a construction that a motor is arranged for each rotation shaft and a speed of each motor is independently controlled.

Inspection apparatus 30 according to the present embodiment includes a rotation apparatus (ball rotation portion 33) and an inspection portion (inspection mechanism portion 34) which inspects the surface of spherical body 21 rotated by the rotation apparatus. In this case, by rotating the spherical body with the rotation apparatus (ball rotation portion 33) according to the present embodiment, an operation of spherical body 21 can be controlled such that all regions on the surface of spherical body 21 pass a region facing inspection mechanism portion 34 without fail. Therefore, by inspecting the surface of spherical body 21 with inspection mechanism portion 34 in the region, the entire surface of spherical body 21 can be inspected. Therefore, spherical body 21 can be inspected more accurately and in a shorter period of time than in an example where the surface of spherical body 21 is manually inspected.

The rotation method according to the present embodiment includes bringing conical first cone 1a having first rotation shaft 2a into contact with spherical body 21 to be rotated at the first contact point of spherical body 21 from the first direction along first rotation shaft 2a and bringing conical second cone 1b having second rotation shaft 2b extending in the direction along first rotation shaft 2a into contact at the second contact point different from the first contact point of spherical body 21 from the first direction and rotating spherical body 21 around an axis extending in a direction along a line segment connecting the first contact point and the second contact point to each other while first cone 1a and second cone 1b are relatively pressed against spherical body 21 from the first direction. In the step of rotating the spherical body, a rotation speed of second rotation shaft 2b is varied relatively to a rotation speed of first rotation shaft 2a.

By doing so, a rotation speed of first cone 1a in contact with rotating spherical body 21 and a rotation speed of second cone 1b can be varied relatively to each other. Therefore, spherical body 21 can be rotated such that all portions of the surface of spherical body 21 pass a region viewed from one certain point. Therefore, the entire surface of spherical body 21 can reliably be checked in this region.

Even when first cone 1a and second cone 1b are worn due to contact with spherical body 21, first cone 1a and second cone 1b are pressed against spherical body 21 from the first direction along first rotation shaft 2a so that a distance from an axial line of the rotation shaft of first cone 1a to the point of contact between spherical body 21 and the first cone or a distance from an axial line of the rotation shaft of second cone 1b to the point of contact between spherical body 21 and second cone 1b can be maintained constant. Therefore, even when first cone 1a or second cone 1b is worn, a condition of swing of the rotating axis of spherical body 21 owing to rotation of first cone 1a or second cone 1b can be maintained constant. Since the rotating axis of spherical body 21 can accurately be swung for a long period of time, the entire surface of spherical body 21 can be checked in a stable manner.

In the rotation method, in the step of rotating the spherical body, as shown in Fig. 2, spherical body 21 may be rotated by rotation roller 5 in contact with spherical body 21 from the second direction opposite to the first direction. In this case, spherical body 21 can be rotated by rotation roller 5 without interference with first cone 1a or second cone 1b.

The inspection method according to the present embodiment includes preparing spherical body 21 to be inspected (S1) and inspecting the surface of rotating spherical body 21 while the spherical body is rotated with the rotation method. In this case, by rotating spherical body 21 with the rotation method, all regions on the surface of spherical body 21 can pass a region facing the inspection portion without fail. Therefore, by inspecting the surface of spherical body 21 in that region, the entire surface of spherical body 21 can reliably be inspected.

The method of manufacturing a bearing according to the present embodiment includes processing a spherical body constituting a bearing (component manufacturing step (S10)), inspecting the processed spherical body with the inspection method (component inspection step (S20)), and assembling a bearing using the inspected spherical body (assembly step (S30)).

By doing so, bearing 40 can be assembled with spherical body 21 of which entire surface has been inspected, so that spherical body 21 with a flaw in the surface can be prevented from being applied as rolling element 43 to a bearing. Therefore, a ratio of defective bearing 40 can be lowered.

Bearing 40 according to the present embodiment is bearing 40 manufactured with the method of manufacturing a bearing. In this case, bearing 40 with sufficient durability including rolling element 43 which is the spherical body of which entire surface has been inspected (see Fig. 19) can be obtained.

Though an embodiment of the present invention has been described above, the embodiment described above can also variously be modified. The scope of the present invention is not limited to the embodiment described above. The scope of the present invention is defined by the terms of the claims and is intended to include any modifications within the scope and meaning equivalent to the terms of the claims.

INDUSTRIAL APPLICABILITY

The present disclosure is particularly advantageously applied to inspection of a surface of a spherical body.

REFERENCE SIGNS LIST

1a first cone; 1b second cone; 2a first rotation shaft; 2b second rotation shaft; 3 base portion; 4 varying portion; 4a eccentric member; 5 rotation roller; 6 auxiliary roller; 10 rotation apparatus; 11 to 14, 18 arrow; 15 rotation shaft center; 16 pitch circle center; 17 pitch circle; 17a position; 21 spherical body; 21a center of rolling element; 30 inspection apparatus; 31 control unit; 32 ball supply portion; 33 ball rotation portion; 34 inspection mechanism portion; 34a laser measurement instrument; 35 line segment; 40 bearing; 41 outer ring; 41a outer ring rolling contact surface; 42 inner ring; 42a inner ring rolling contact surface; 43 rolling element; and 44 cage

**Claims**

1. A rotation method comprising:

   bringing a conical first cone having a first rotation shaft into contact with a spherical body to be rotated at a first contact point of the spherical body from a first direction along the first rotation shaft and bringing a conical second cone having a second rotation shaft extending in a direction along the first rotation shaft into contact at a second contact point different from the first contact point of the spherical body from the first direction; and rotating the spherical body around an axis extending in a direction along a line segment connecting the first contact point and the second contact point to each other while the first cone and the second cone are relatively pressed against the spherical body from the first direction, in the rotating the spherical body, a rotation speed of the second rotation shaft being varied relatively to a rotation speed of the first rotation shaft.

2. The rotation method according to claim 1, wherein in the rotating the spherical body, the spherical body is rotated with a rotation roller which comes in contact with the spherical body from a second direction opposite to the first direction.

3. An inspection method comprising:

   preparing a spherical body to be inspected; and inspecting a surface of the rotating spherical body while the spherical body is rotated with the rotation method according to claim 1 or 2.

4. A method of manufacturing a bearing comprising:

   processing a spherical body constituting a bearing; inspecting the processed spherical body with the inspection method according to claim 3; and assembling a bearing with the inspected spherical body.

5. A bearing manufactured with the method of manufacturing a bearing according to claim 4.

6. A rotation apparatus comprising:

   a conical first cone which has a first rotation shaft and comes in contact with a spherical body to be rotated at a first contact point of the spherical body from a first direction along the first rotation shaft;

a conical second cone which has a second rotation shaft extending in a direction along the first rotation shaft and comes in contact at a second contact point different from the first contact point of the spherical body from the first direction;

a pressing mechanism which relatively presses the first cone and the second cone against the spherical body from the first direction;

a rotationally driving portion which rotates the spherical body in contact with the first cone and the second cone around an axis extending in a direction along a line segment connecting the first contact point and the second contact point to each other; and

a varying portion which varies a rotation speed of the second rotation shaft relatively to a rotation speed of the first rotation shaft.

7. The rotation apparatus according to claim 6, wherein

the rotationally driving portion includes a rotation roller which comes in contact with the spherical body from a second direction opposite to the first direction and rotates the spherical body.

8. The rotation apparatus according to claim 6 or 7, the rotation apparatus further comprising a support member which supports the spherical body.

9. The rotation apparatus according to any one of claims 6 to 8, wherein the varying portion includes an eccentric member connected to each of the first rotation shaft and the second rotation shaft.

10. An inspection apparatus comprising:

the rotation apparatus according to any one of claims 6 to 9; and

an inspection portion which inspects a surface of a spherical body rotated by the rotation apparatus.

FIG.1

FIG.2

FIG.3

15    16

e

2a

4a

17

FIG.4

e

17

P/2

A

θ L

K

17a

16    15

## FIG.5

## FIG.6

FIG.7

FIG.8

## FIG.9

[mm]

MERIDIANS OF
17/64″ MODEL
ECCENTRICITY e=0.25

— nth ROTATION
---- (n-1)th ROTATION
—·— (n-2)th ROTATION

PITCH ANGLE α=9.427°
PITCH p=0.5550mm

## FIG.10

PITCH ANGLE
α [° ]

$\alpha = \pi \beta$ (° )

e=0.5
e=0.45
e=0.25
e=0.1

◆ PITCH ANGLE α(° )
—— $\alpha = \pi \beta$ (° )

ANGLE (DEFLECTION ANGLE) OF
SWING MOTION β [° ]

FIG.11

PITCH p[mm]

AMOUNT OF ECCENTRICITY e[mm]

p=2.219e
(CALCULATE FOR
17/64″ TO 1/2″)

FIG.12

[mm]

21

MERIDIANS OF
13/32″ MODEL

ECCENTRICITY E=0.45mm

PITCH ANGLE $\alpha$ =11.092°
PITCH p=0.9989mm

[mm]

FIG.13

## FIG.14

[mm]

## FIG.15

## FIG.16

FIG.17

```
┌─────────────────────────┐
│    PREPARATION STEP      │── S1
└─────────────────────────┘
            │
            ▼
┌─────────────────────────┐
│    INSPECTION STEP       │── S2
└─────────────────────────┘
```

# FIG.18

```
┌─────────────────────────┐
│   COMPONENT             │ ─ S10
│   MANUFACTURING STEP    │
└─────────────────────────┘
            │
            ▼
┌─────────────────────────┐
│   COMPONENT             │ ─ S20
│   INSPECTION STEP       │
└─────────────────────────┘
            │
            ▼
┌─────────────────────────┐
│   ASSEMBLY STEP         │ ─ S30
└─────────────────────────┘
```

# FIG.19

## INTERNATIONAL SEARCH REPORT

| International application No. |
|---|
| PCT/JP2016/056794 |

**A. CLASSIFICATION OF SUBJECT MATTER**
*G01N21/84*(2006.01)i, *F16C33/32*(2006.01)i, *G01B11/30*(2006.01)i, *G01M13/04*(2006.01)i, *G01N21/88*(2006.01)i

According to International Patent Classification (IPC) or to both national classification and IPC

**B. FIELDS SEARCHED**

Minimum documentation searched (classification system followed by classification symbols)
G01N21/84-21/958, G01B11/00-11/30, G01M13/04, F16C33/32

Documentation searched other than minimum documentation to the extent that such documents are included in the fields searched
Jitsuyo Shinan Koho          1922–1996   Jitsuyo Shinan Toroku Koho   1996–2016
Kokai Jitsuyo Shinan Koho    1971–2016   Toroku Jitsuyo Shinan Koho   1994–2016

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | JP 2000-310619 A (Amatsuji Steel Ball Mfg. Co., Ltd.),<br>07 November 2000 (07.11.2000),<br>paragraphs [0009], [0010]; fig. 1, 2<br>(Family: none) | 1-3,6-10<br>4 |
| X<br>Y | JP 2002-277226 A (Amatsuji Steel Ball Mfg. Co., Ltd.),<br>25 September 2002 (25.09.2002),<br>paragraphs [0022] to [0027]; fig. 4 to 7<br>& GB 2373580 A          & TW 538240 B<br>& CN 1375693 A          & US 2002/0135756 A1<br>paragraphs [0039] to [0045]; fig. 4 to 7 | 1-3,6-10<br>4 |

| [×] | Further documents are listed in the continuation of Box C. | [ ] | See patent family annex. |
|---|---|---|---|

| * | Special categories of cited documents: |
|---|---|
| "A" | document defining the general state of the art which is not considered   to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search<br>    26 April 2016 (26.04.16) | Date of mailing of the international search report<br>    17 May 2016 (17.05.16) |
|---|---|
| Name and mailing address of the ISA/<br>    Japan Patent Office<br>    3-4-3,Kasumigaseki,Chiyoda-ku,<br>    Tokyo 100-8915,Japan | Authorized officer<br><br>Telephone No. |

Form PCT/ISA/210 (second sheet) (January 2015)

**INTERNATIONAL SEARCH REPORT**

International application No.

PCT/JP2016/056794

C (Continuation).   DOCUMENTS CONSIDERED TO BE RELEVANT

| Category* | Citation of document, with indication, where appropriate, of the relevant passages | Relevant to claim No. |
|---|---|---|
| X<br>Y | JP 2012-37424 A  (Tsubaki Nakashima Co., Ltd.),<br>23 February 2012 (23.02.2012),<br>paragraphs [0001], [0003], [0034], [0051]; fig.<br>2, 8<br>& EP 2522644 A1        & TW 201132958 A<br>& CN 102918006 A        & US 2012/0274941 A1<br>paragraphs [0001], [0003], [0145], [0177]; fig.<br>9, 15 | 1-3,5-7,9,10<br>4 |
| X<br>Y | JP 2003-232743 A  (Koyo Seiko Co., Ltd.),<br>22 August 2003 (22.08.2003),<br>paragraphs [0018] to [0024]<br>(Family: none) | 5<br>4 |
| X<br>Y | JP 9-72850 A  (NTN Corp.),<br>18 March 1997 (18.03.1997),<br>paragraph [0002]<br>(Family: none) | 5<br>4 |

Form PCT/ISA/210 (continuation of second sheet) (January 2015)

**EP 3 279 644 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 8271446 A

- JP 4217608 B